# EUROPEAN PATENT APPLICATION

(11) **EP 4 593 100 A1**
(43) Date of publication of application: **30.07.2025**
(21) Application number: 25153942.5
(22) Date of filing: 24.01.2025
(51) Int. Cl.: H01M 4/04, H01M 4/131, H01M 4/1315, H01M 4/136, H01M 4/36, H01M 4/525, H01M 4/58, H01M 10/0525, H01M 4/62, H01M 4/02

(54) **POSITIVE ELECTRODE ACTIVE MATERIALS, PREPARATION METHODS THEREOF, POSITIVE ELECTRODES, AND RECHARGEABLE LITHIUM BATTERIES**

(30) Priority: 26.01.2024 KR 20240012617
(71) Applicant: SAMSUNG SDI CO., LTD., Yongin-si, Gyeonggi-do 17084 (KR)
(72) Inventor: KIM, Young-Ki, 17084 Yongin-si (KR); CHUNG, Hyunjei, 17084 Yongin-si (KR); CHO, Yongmok, 17084 Yongin-si (KR); CHOI, Minjae, 17084 Yongin-si (KR); LEE, Soonrewl, 17084 Yongin-si (KR)
(74) Representative: Marks & Clerk LLP

(57) **Abstract**

A positive electrode active material includes core particles including lithium cobalt-based composite oxide; and a coating layer located on a surface of the core particles and including a lithium iron phosphate-based compound and aluminium. The positive electrode active material according to some embodiments has long cycle-life characteristics and improved stability even at high voltage. When the positive electrode active material is applied to a rechargeable lithium battery, suitably high initial charge/discharge capacity and efficiency may be achieved under high-voltage operating conditions, and suitably long cycle-life characteristics may be achieved under high-voltage and high-temperature conditions.

## Description

### BACKGROUND OF THE INVENTION

### (a) Field of the Invention

One or more embodiments of the present disclosure are directed toward positive electrode active materials, preparation methods thereof, positive electrodes including the positive electrode active materials, and rechargeable lithium batteries including the positive electrodes.

### (b) Description of the Related Art

A portable information device such as a cell phone, a laptop, smart phone, and/or the like, and/or an electric vehicle, may utilize a rechargeable lithium battery having relatively high energy density and relatively easy portability as a driving power source. Recently, research has been actively conducted for the application a rechargeable lithium battery with high energy density as a driving power source and/or power storage power source for hybrid and/or electric vehicles (automotive battery), and/or as a power storage power source for energy storage systems or power walls (ESS).

Various positive electrode active materials have been investigated to achieve rechargeable lithium batteries for application in the above-described uses. Among them, lithium nickel-based oxide, lithium nickel-manganese-cobalt-based composite oxide, lithium nickel-cobalt-aluminium-based composite oxide, and lithium cobalt-based oxide are often used as positive electrode active materials. However, while the demand for large-sized, high-capacity, high-voltage and/or high-energy-density rechargeable lithium batteries has recently increased significantly, the stability of driving rechargeable lithium batteries at suitably high voltage remains unsuitably weak (or difficult). Consequently, there is a need or desire to improve the stability of the positive electrode active material and to develop a positive electrode active material with reduced heat generation even if (e.g., when) operated at high voltage.

### SUMMARY OF THE INVENTION

One or more embodiments of the present invention provide: a positive electrode active material including a surface-coated lithium cobalt-based composite oxide, which has suitably high capacity and suitably long cycle-life characteristics and improved stability even at high voltage; a method for preparing the same; a positive electrode including the positive electrode active material; and a rechargeable lithium battery including the positive electrode. Additional aspects of the invention will be set forth in part in the description which follows and, in part, will be apparent from the description, or may be learned by practice of the presented embodiments of the disclosure.

In some embodiments, the invention provides a positive electrode active material, which includes core particles including lithium cobalt-based composite oxide; and a coating layer located on a surface of each of the core particles, said coating layer including a lithium iron phosphate-based compound and aluminium.

In some embodiments, the invention provides a method of preparing a positive electrode active material, which includes (i) dry-mixing a lithium cobalt-based composite oxide, a lithium iron phosphate-based compound, and an aluminium raw material to prepare a mixture; and (ii) firing the mixture in a nitrogen or inert gas atmosphere.

In some embodiments, the invention provides a positive electrode which includes a positive electrode current collector and a positive electrode active material layer on the positive electrode current collector, wherein the positive electrode active material layer includes the aforementioned positive electrode active material of the present embodiments.

Some embodiments of the invention provide a rechargeable lithium battery including the aforementioned positive electrode, a negative electrode, and an electrolyte.

The positive electrode active material according to some embodiments has suitably long cycle-life characteristics and improved stability even at high voltage. If (e.g., when) the positive electrode active material is applied to a rechargeable lithium battery, suitably high initial charge/discharge capacity and efficiency may be achieved under high-voltage operating conditions, and long cycle-life characteristics may be achieved under high-voltage and high-temperature conditions.

At least some of the above and other features of the invention are set out in the claims.

### BRIEF DESCRIPTION OF THE DRAWINGS

FIGS. 1 to 4 are schematic diagrams showing a rechargeable lithium battery according to some embodiments.
FIGS. 5 and 6 are each a scanning electron microscope (SEM) image of the positive electrode active material according to Comparative Example 1.
FIGS. 7 and 8 are each an SEM image of the positive electrode active material according to Example 1.
FIG. 9 is a graph showing the amount of heat flow according to temperature of the positive electrode active materials according to each of Example 1 and Comparative Example 1 measured through differential scanning calorimetry (DSC).

### DETAILED DESCRIPTION OF THE EMBODIMENTS

Hereinafter, example embodiments will be described in more detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" refers to a mixture, a laminate, a composite, a copolymer, an alloy, a blend, a reaction product, and/or the like of the constituents.

Herein, it should be understood that terms such as "comprises", "includes", and/or "have" are intended to designate the presence of an embodied feature, number, step (e.g., act or task), element, or a combination thereof, but it does not preclude the possibility of the presence or addition of one or more other features, number, step (e.g., act or task), element, or a combination thereof.

In the drawings, the thickness of layers, films, panels, regions, and/or the like, are exaggerated for clarity and like reference numerals designate like elements throughout, and duplicative descriptions thereof may not be provided the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

"Layer" herein includes not only a shape formed on the whole surface if (e.g., when) viewed from a plan view, but also a shape formed on a partial surface.

Further, in this specification, the phrase "on a plane", or "plan view", means viewing a target portion from the top, and the phrase "on a cross-section" means viewing a cross-section formed by vertically cutting a target portion from the side.

The average particle diameter (D₅₀) may be measured by a method suitable to those skilled in the art, for example, by a particle size analyzer, or by a transmission electron microscopic image, and/or a scanning electron microscopic image. In one or more embodiments, it is possible to obtain an average particle diameter value by measuring using a dynamic light scattering method, performing data analysis, counting the number of particles for each particle size range, and calculating from this. Unless otherwise defined, the average particle diameter (D₅₀) may refer to the diameter of particles having a cumulative volume of 50 volume% in the particle size distribution. As used herein, if (e.g., when) a definition is not otherwise provided, the average particle diameter (D₅₀) refers to a diameter of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and/or the like.

Herein, "metal" is interpreted as a concept including ordinary metals, transition metals and metalloids (semi-metals).

It will be understood that, although the terms first, second, etc., may be used herein to describe various elements, these elements should not be limited by these terms. These terms are only used to distinguish one element from another element. Thus, a first element could be termed a second element without departing from the teachings of the present invention. Similarly, a second element could be termed a first element.

As used herein, the terms "use", "using", and "used" may be considered synonymous with the terms "utilize", "utilizing", and "utilized", respectively.

As used herein, expressions such as "at least one of", "one of", and "selected from", when preceding a list of elements, modify the entire list of elements and do not modify the individual elements of the list. For example, "at least one selected from among a, b and c", and "at least one of a, b and c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

Further, the use of "may" when describing embodiments of the present disclosure refers to "one or more embodiments of the present disclosure".

Spatially relative terms, such as "beneath", "below", "lower", "above", "upper", "bottom", "top" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately", as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, ± 20%, ± 10%, or ± 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

### Positive Electrode Active Material

According to the invention there is provided a positive electrode active material which includes core particles including lithium cobalt-based composite oxide; and a coating layer located on a surface of the core particles, said coating layer including a lithium iron phosphate-based compound and aluminium.

Lithium cobalt-based positive electrode active materials (that is, positive electrode active materials including lithium cobalt-based composite oxide) have excellent or suitable density characteristics because they are in the form of single particles, but may have a problem with poor stability if (e.g., when) operating in a high-voltage range. Accordingly, in order to improve the stability of the lithium cobalt-based positive electrode active material and reduce an amount of heat generated in the high voltage region, in some embodiments, a coating layer including a lithium iron phosphate-based compound and aluminium is formed on a surface of the lithium cobalt-based positive electrode active material, thereby improving not only high-voltage, high-temperature cycle-life characteristics of the battery, but also its initial charge/discharge capacity and efficiency.

### Core Particles

The core particles include lithium cobalt-based composite oxide, and the lithium cobalt-based composite oxide may be represented, for example, by Chemical Formula 1:

**Chemical Formula 1** Liₐ₁COₓ₁Al_{y1}Mg_{z1}M¹_{w1}O_{2-b1}X_{b1}

and wherein, in Chemical Formula 1, 0.9≤a1≤1.8, 0.8≤x1≤0.99, 0≤y1≤0.1, 0≤z1≤0.1, 0≤w1≤0.1, 0.9≤x1+y1+z1≤1.1, and 0≤b1≤0.1, M¹ is one or more elements selected from among B, Ba, Ca, Ce, Cr, Cu, Fe, Mn, Mo, Nb, Si, Sn, Sr, Ti, V, W, Y, Zn, and Zr, and X is one or more elements selected from among F, P, and S.

In Chemical Formula 1, for example, 0.9≤a1≤1.5, or 0.9≤a1≤1.2. In one or more embodiments, for example, 0.8<x1≤0.99, 0.82≤x1≤0.99, 0.84≤x1≤0.99, 0.86≤x1 ≤0.99, 0.88≤x1≤0.98, or 0.9≤x1≤0.97; 0<y1≤0.1, 0.01≤y1≤0.09, 0.01≤y1≤0.05, 0.01 ≤y1≤0.03, or 0.01≤y1≤0.02; 0<z1 ≤0.1, 0.001≤z1≤0.09, 0.001≤z1≤0.05, 0.005≤z1≤ 0.03, or 0.005≤z1≤0.01; 0<w1 ≤0.1, 0.001≤w1≤0.075, 0.001<w1≤0.05, or 0.001<w1≤ 0.025.

In some embodiments, the lithium cobalt-based composite oxide may further include aluminium, magnesium, or a combination thereof. For example, aluminium and magnesium may be a type or kind of dopant, and if (e.g., when) the lithium cobalt-based composite oxide is doped with aluminium, magnesium, or a combination thereof, capacity characteristics and cycle-life characteristics of the battery when it is operated at high voltage may be improved.

If aluminium is included in the lithium cobalt-based composite oxide, the aluminium content (e.g., amount) may be about 1 mol% to about 3 mol%, for example, about 1.5 mol% to about 2.5 mol%, based on 100 mol% of metals excluding lithium in the lithium cobalt-based composite oxide. If the aluminium content (e.g., amount) satisfies any of the above ranges, the high-voltage characteristics of the positive electrode active material can be further improved.

The positive electrode active material is in the form of particles, and the average particle diameter (D₅₀) of the particles may be, for example, about 1 µm to about 30 µm. If the average particle diameter (D₅₀) of the core particles satisfies the above range, suitably high capacity and long cycle-life can be achieved, and it can be advantageous for forming a coating layer according to some embodiments. As an example, the positive electrode active material may be (e.g., may comprise) large particles with an average particle diameter (D₅₀) of about 9 µm to about 25 µm, or may be (e.g., may comprise) small particles with an average particle diameter (D₅₀) of about 0.5 µm to about 8 µm, and the large particles and small particles may be appropriately or suitably mixed. The average particle diameter (D₅₀) of large particles may be, for example, about 10 µm to about 20 µm, or about 12 µm to about 18 µm, and the average particle diameter (D₅₀) of small particles may be, for example, about 1 µm to about 6 µm, or about 2 µm to about 5 µm. In the present specification, when particles are spherical, "diameter" indicates an average particle diameter (D₅₀), and when the particles are non-spherical, the "diameter" indicates a major axis length. Also, if the positive electrode active material includes a mixture of large and small particles, the large particles may be included in an amount of about 60 wt% to about 95 wt%, or about 70 wt% to about 90 wt%, and the small particles may be included in an amount of about 5 wt% to about 40 wt%, or about 10 wt% to about 30 wt%. If large and small particles are mixed in the above content (e.g., amount) ranges, cycle-life characteristics can be improved while maximizing or increasing capacity and energy density. As used herein, if (e.g., when) a definition is not otherwise provided, the average particle diameter (D₅₀) refers to a diameter of particles having a cumulative volume of 50 volume% in the particle size distribution that is obtained by measuring the size (diameter or major axis length) of about 20 particles at random in a scanning electron microscope image for positive electrode active materials.

The shape of the core particle may be irregular, spherical, spherical, and/or the like.

### Coating Layer

The positive electrode active material includes a coating layer located on a surface of the core particle(s) comprised in the positive electrode active material, said coating layer including a lithium iron phosphate-based compound and aluminium. When the coating layer is formed on the core particle(s) of the positive electrode active material, cycle-life characteristics and/or capacity characteristics at high voltage may be further improved. Because the core particles were described above, a duplicative definition thereof will not be provided and the coating layer will be described.

The lithium iron phosphate-based compound may include, for example, lithium iron phosphate, lithium manganese iron phosphate, or a combination thereof, and the lithium iron phosphate-based compound may be represented by Chemical Formula 2 or Chemical Formula 3:

**Chemical Formula 2** Liₐ₂Fe₍₁₋ₓ₂₎M²ₓ₂PO₄

and wherein, in Chemical Formula 2, 0.90≤a2≤1.5, 0≤x2≤0.4, and M² may be Al, Ca, Ce, Cr, Cu, La, Mg, Mn, Mo, Nb, Ni, Sn, Sr, Ti, V, W, Y, Zn, Zr, or a combination thereof.

The compound represented by Chemical Formula 2 may be lithium iron phosphate. In Chemical Formula 2, for example, 0.90≤a2≤1.2, or 0.95≤a2≤1.1, and 0≤x2≤0.3, 0≤x2≤0.2, 0≤x2≤0.1, or 0<x2≤0.05. For example, if (e.g., when) a2=1 and x2=0, Chemical Formula 2 may be represented by LiFePO₄.

**Chemical Formula 3** Liₐ₃Mnₓ₃Fe_{(1 -x3-y3)}M³_{y3}PO₄

and wherein, in Chemical Formula 3, 0.90≤a3≤1.5, 0.1≤x3≤0.9, y3, 0<x3+y3<1, and M³ may be Al, Ca, Ce, Cr, Cu, La, Mg, Mo, Nb, Ni, Sn, Sr, Ti, V, W, Y, Zn, Zr, or a combination thereof.

The compound represented by Chemical Formula 3 may be lithium manganese iron phosphate. In Chemical Formula 3, for example, 0.90≤a3≤1.2, or 0.95≤a3≤1.1; 0.2≤x3≤0.8, 0.3≤x3≤0.7, or 0.4≤x3≤0.6. The compound represented by Chemical Formula 3 may be, for example, LiMn_{0.9}Fe_{0.1}PO₄, LiMn_{0.8}Fe_{0.2}PO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, LiMn_{0.2}Fe_{0.8}PO₄, or LiMn_{0.1}Fe_{0.9}PO₄.

For example, the lithium iron phosphate-based compound may include LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, or a combination thereof.

The content (e.g., amount) of the lithium iron phosphate-based compound in the coating layer may be about 0.1 wt% to about 5 wt%, for example about 0.5 wt% to about 4 wt%, or about 1 wt% to about 3 wt%, based on 100 wt% of the total weight of positive electrode active material. The content (e.g., amount) of the lithium iron phosphate-based compound in the coating layer can be measured, for example, through scanning electron microscopy - energy dispersive X-ray spectroscopy (SEM-EDS) analysis of the surface or cross-section of the positive electrode active material. If the content (e.g., amount) of the lithium iron phosphate-based compound in the coating layer satisfies any of the above ranges, cycle-life characteristics and/or stability at high voltage may be further improved.

The coating layer included in the positive electrode active material includes a lithium iron phosphate-based compound and aluminium. The core particles including lithium cobalt-based composite oxide may have a low (e.g., unsuitably low) specific surface area, thus making it difficult to uniformly (e.g., substantially uniformly) coat the surface of the core particle with a lithium iron phosphate-based compound alone. However, according to some embodiments, it is possible to uniformly (e.g., substantially uniformly) coat the surface of the core particle(s) with the lithium iron phosphate-based compound by coating the core particle(s) with the lithium iron phosphate-based compound and aluminium and applying the coating method and conditions described herein below. The lithium iron phosphate-based compound may improve the structural stability of lithium cobalt-based composite oxides under high-voltage and high-temperature conditions and improve battery cycle-life characteristics, due to suitably high phase stability. In one or more embodiments, by coating the surface of the core particle(s) with a lithium iron phosphate-based compound in a substantially uniform form, resistance may be reduced, initial charge and discharge capacity and efficiency may be improved, and high-temperature cycle-life characteristics may be improved. In one or more embodiments, the aluminium in the coating layer not only improves the cycle-life characteristics by improving the structural stability of the core particles, but also acts as a fluorine scavenger (F scavenger) to remove (or substantially reduce) fluorine in the electrolyte solution, thus suppressing or reducing attack on the positive electrode surface from hydrofluoric acid (HF). Accordingly, side reactions between the positive electrode and the electrolyte solution can be suppressed or reduced, the interface can be stabilized or improved, and deterioration of the positive electrode active material can be effectively suppressed or reduced.

The aluminium content (e.g., amount) in the coating layer may be about 0.01 wt% to about 2 wt%, for example about 0.01 wt% to about 1.5 wt%, about 0.05 wt% to about 1 wt%, or about 0.04 wt% to about 0.05 wt% based on 100 wt% of a total metal excluding lithium in the positive electrode active material. This refers only to a content (e.g., amount) of aluminium contained in the coating layer, the aluminium contained inside the core particle is not included. The aluminium content (e.g., amount) in the coating layer may be measured, for example, through SEM-EDS analysis of the surface or cross-section of the positive electrode active material. If the aluminium content (e.g., amount) in the coating layer satisfies any of the above ranges, it is possible to form a substantially uniform and suitably thin coating layer, a resistance of the positive electrode active material may not increase (or may not unsuitably increase), side reactions with the electrolyte may be effectively or suitably suppressed or reduced, and the lithium iron phosphate-based compound may be effectively or suitably coated, thereby improving cycle-life characteristics of rechargeable lithium batteries under high-voltage and high-temperature conditions.

The coating layer according to some embodiments may be in the form of an island and/or a film. For example, the coating layer may be in the form of a film that continuously surrounds the surface of the core particle, or, for example, it may be in the form of a shell that surrounds the entire surface of the core particle. According to some embodiments, the coating layer may be formed to be very (e.g., substantially or suitably) thin and have a substantially uniform thickness, and therefore the positive electrode active material may not increase (e.g., unsuitably increase) resistance or decrease (e.g., unsuitably decrease) capacity, may improve structural stability, effectively or suitably suppress or reduce side reactions with electrolytes, reduce the amount of gas generated under high-voltage and high-temperature conditions, and achieve long cycle-life characteristics.

The coating layer according to some embodiments may have a thickness of about 30 nm to about 500 nm, for example about 30 nm to about 450 nm, about 30 nm to about 400 nm, about 30 nm to about 350 nm, about 30 nm to about 300 nm, about 30 nm to about 250 nm, about 30 nm to about 200 nm, about 30 nm to about 150 nm, about 50 nm to about 500 nm, about 80 nm to about 500 nm, or about 100 nm to about 500 nm. If the coating layer satisfies any of the above thickness ranges, the structural stability of the positive electrode active material may be improved without (or substantially without) increasing resistance or reducing capacity due to the coating, and the side reaction with the electrolyte may be effectively or suitably suppressed or reduced. The thickness of the coating layer may be measured through, for example, time-of-flight secondary ion mass spectrometry (TOF-SIMS), X-ray photoelectron spectroscopy (XPS), and/or energy-dispersive X-ray spectroscopy (EDS) analysis, and in some embodiments, the thickness range of the coating layer may be measured through transmission electron microscopy energy-dispersive X-ray spectroscopy (TEM-EDS) line profile.

### Method of Preparing Positive Electrode Active Material

In some embodiments, a method of preparing a positive electrode active material includes (i) dry-mixing a lithium cobalt-based composite oxide, a lithium iron phosphate-based compound, and an aluminium raw material to prepare a mixture; and (ii) firing the mixture in a nitrogen or inert gas atmosphere.

Because the lithium cobalt-based composite oxide and lithium iron phosphate-based compound have been described above, a duplicative description thereof will not be provided, and the aluminium raw material will be described.

The aluminium raw material may include, for example, aluminium nitrate, aluminium sulfate, aluminium carbonate, aluminium hydroxide, aluminium oxide, or a combination thereof, and may include, for example, aluminium hydroxide, and for example may be Al(OH)₃.

In the step (e.g., act or task) (i) of the lithium cobalt-based composite oxide, the lithium iron phosphate-based compound, and the aluminium raw material being dry-mixed, the lithium cobalt-based composite oxide may be included in an amount of about 90 wt% to about 99.8 wt%, the lithium iron phosphate-based compound in an amount of about 0.1 wt% to about 9.9 wt%, and the aluminium raw material in an amount of about 0.01 wt% to about 2 wt% based on 100 wt% of a total weight thereof (e.g., total weight of the mixture). For example, the lithium cobalt-based composite oxide may be included in an amount of about 94 wt% to about 99.4 wt%, or about 96 wt% to about 98 wt%, the lithium iron phosphate-based compound may be included in an amount of about 0.5 wt% to about 5 wt%, or about 1 wt% to about 3 wt%, and the aluminium raw material may be included in an amount of about 0.01 wt% to about 1 wt%, or about 0.05 wt% to about 0.1 wt% based on 100 wt% of a total weight of the mixture. If the content (e.g., amount) ranges are satisfied, a positive electrode active material in which a coating layer containing the lithium iron phosphate-based compound and the aluminium is coated with a substantially uniform thickness on core particles including the lithium cobalt-based composite oxide may be obtained, thereby improving initial charge/discharge capacity, efficiency, and high-temperature cycle-life characteristics of a rechargeable lithium battery and also, its thermal safety.

In the step (e.g., act or task) (i), the dry-mixing may be performed at about 2,000 rpm or more, for example, about 2,000 rpm to about 3,000 rpm, or about 2,000 rpm to about 2,500 rpm. The dry-mixing may be performed for about 1 minute to about 60 minutes, for example, about 1 minute to about 30 minutes, or about 1 minute to about 10 minutes. If the dry-mixing satisfies the above conditions, if (e.g., when) the mixing is completed, the mixture may be maintained at about 45 °C or higher for about 3 minutes or more, and accordingly, the lithium iron phosphate-based compound and the aluminium may be uniformly (e.g., substantially uniformly) coated on the surface of the core particles including the lithium cobalt-based composite oxide.

When the dry-mixing is completed at about 2,000 rpm or more for a set or predetermined period, the mixture may satisfy a temperature of about 45 °C or higher, for example, about 45 °C to about 80 °C, about 45 °C to about 50 °C, or about 40 °C to about 45 °C, and these temperatures (e.g., this temperature) may be maintained for about 3 minutes or more, for example, about 3 minutes to about 10 minutes, or about 3 minutes to about 5 minutes. It is believed that because of these conditions, the lithium iron phosphate-based compound may be uniformly (e.g., substantially uniformly) coated on the surface of the core particles containing the lithium cobalt-based composite oxide with a relatively small specific surface area. The method of preparing a positive electrode active material according to some embodiments may further include maintaining the mixture prepared in the step (e.g., act or task) (i) at about 45 °C or higher for about 3 minutes or more.

In the step (e.g., act or task) (ii), the mixture is fired. The positive electrode active material prepared by firing the mixture under set or predetermined conditions, compared to the mixture itself without the firing as a positive electrode active material, exhibits suitably high initial charge/discharge capacity, suitably high efficiency, and further improved high-temperature cycle-life characteristics. The firing may proceed under a nitrogen or inert gas atmosphere. If the firing is performed, for example, under an oxygen atmosphere, or in the air rather than under the nitrogen or inert gas atmosphere, compared to the firing under the nitrogen or inert gas atmosphere, because components on the positive electrode active material surface and/or properties are modified, the initial charge/discharge capacity and efficiency and high-temperature cycle-life characteristics are significantly deteriorated.

The firing of the mixture in the step (e.g., act or task) (ii) may be performed within a temperature range of about 300 °C to about 500 °C, for example, about 350 °C to about 450 °C, about 370 °C to about 430 °C, or about 390 °C to about 410 °C. If the firing is performed within any of the above temperature ranges, the lithium iron phosphate-based compound and the aluminium may be suitably firmly coated on the surface of the core particles including the lithium cobalt-based composite oxide to secure suitably high-capacity and long cycle-life characteristics and to improve stability at a high voltage.

### Positive Electrode

According to the invention there is also provided a positive electrode which includes a positive electrode current collector and a positive electrode active material layer on the positive electrode current collector, wherein the positive electrode active material layer includes the positive electrode active material according to the present embodiments. The positive electrode active material layer may further include other types (or kinds) of positive electrode active materials, in addition to the aforementioned positive electrode active materials. In some embodiments, the positive electrode active material layer may optionally further include a binder, a conductive material, or a combination thereof.

According to some embodiments, a loading level of the positive electrode active material layer may be about 10 mg/cm² to about 40 mg/cm², for example about 10 mg/cm² to about 30 mg/cm², or about 10 mg/cm² to about 20 mg/cm². Additionally, a density of the positive electrode active material layer in the final compressed positive electrode may be about 3.3 g/cc to about 3.7 g/cc, for example about 3.3 g/cc to about 3.6 g/cc, or about 3.4 g/cc to about 3.58 g/cc. When applying the positive electrode active material according to some embodiments, it is advantageous to implement such a loading level and positive electrode density, and a positive electrode that satisfies the loading level and positive electrode density in the above range is suitable for implementing a high-capacity, high-energy-density rechargeable lithium battery.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material is included to provide (or improve) electrode conductivity and any suitable electrically conductive material may be used as a conductive material unless it causes an undesirable chemical change in the battery. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a mixture thereof.

The content (e.g., amount) of the binder and the conductive material may each independently be about 0.5 wt% to about 5 wt% based on 100 wt% of the positive electrode active material layer.

The positive electrode current collector may include Al foil, but the present disclosure is not limited thereto.

### Rechargeable Lithium Battery

The present invention further provides a rechargeable lithium battery including the positive electrode of the present embodiments, a negative electrode, and an electrolyte. As an example, the rechargeable lithium battery may include a positive electrode, a negative electrode, a separator between the positive electrode and the negative electrode, and an electrolyte solution.

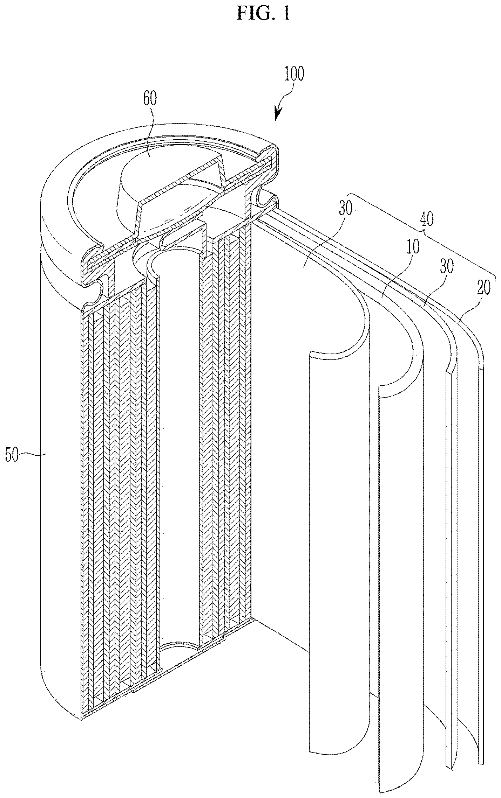

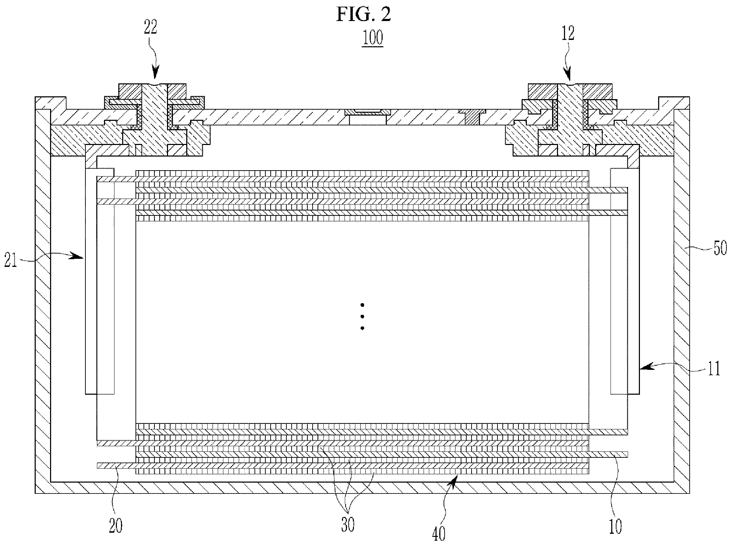

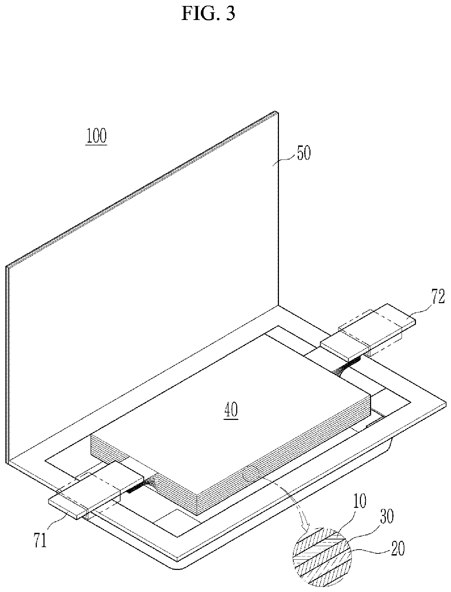

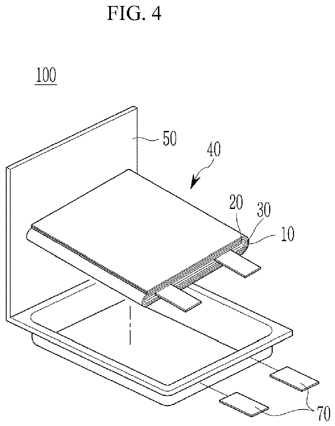

The rechargeable lithium battery may be classified into cylindrical, prismatic, pouch, coin, and/or the like depending on the shape. FIGS. 1 to 4 are schematic diagrams each showing a rechargeable lithium battery according to some embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. Additionally, as shown in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 may further include an electrode tab 70, including a positive electrode tab 71 and a negative electrode tab 72, serving as an electrical path for inducing the current formed in the electrode assembly 40 to the outside.

The rechargeable lithium battery according to some embodiments may be rechargeable at a high voltage or may be suitable for being driven at a high voltage. For example, the upper charging limit voltage of a rechargeable lithium battery may be greater than or equal to about 4.45 V, about 4.45 V to about 4.7 V, about 4.45 V to about 4.6 V, or about 4.45 V to about 4.55 V, and/or the like. By applying the positive electrode active material according to some embodiments, the rechargeable lithium battery can significantly reduce an amount of gas generated even if (e.g., when) charged at high voltage and can achieve suitably high capacity and long cycle-life characteristics.

### Negative Electrode

The negative electrode may include a current collector and a negative electrode active material layer on the current collector, and the negative electrode active material layer may include a negative electrode active material, and may further include a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example, crystalline carbon, amorphous carbon, or a combination thereof as a carbon-based negative electrode active material. The crystalline carbon may be irregular, or sheet, flake, spherical, and/or fiber shaped (e.g., in a form of fibers) natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and a combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and/or a combination thereof), and/or a combination thereof. The Sn-based negative electrode active material may be Sn, SnOₓ (0 < x ≤ 2), for example, SnO₂, a Sn alloy, and/or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon, hard carbon, a mesophase pitch carbonized product, and/or calcined coke.

When the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of the silicon-carbon composite. In one or more embodiments, if (e.g., when) the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). At this time, the atomic content ratio of Si:O, which indicates a degree of oxidation, may be about 99:1 to about 33:67. As used herein, if (e.g., when) a definition is not otherwise provided, an average particle diameter (D₅₀) indicates a particle where an accumulated volume is about 50 volume% in a particle distribution.

The Si-based negative electrode active material and/or Sn-based negative electrode active material may be mixed with the carbon-based negative electrode active material. When the Si-based negative electrode active material and/or Sn-based negative electrode active material and the carbon-based negative electrode active material are mixed and used as a mixture, the mixing ratio may be a weight ratio (e.g., in wt%) of about 1:99 to about 90:10.

### Binder

The binder serves to suitably adhere the negative electrode active material particles to each other and also to adhere the negative electrode active material to the current collector. The binder may be a non-aqueous binder, an aqueous binder, a dry binder, and/or a combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, and/or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and/or a combination thereof.

If (e.g., when) an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, and/or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a combination thereof.

### Conductive Material

The conductive material is included to provide (or improve) electrode conductivity and any suitable electrically conductive material may be used as a conductive material unless it causes an undesirable chemical change in the battery. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; or a mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, and/or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte that includes a non-aqueous organic solvent and a lithium salt.

The non-aqueous organic solvent serves as a medium for transmitting ions taking part in the electrochemical reaction of a battery. The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group, and/or the like); amides such as dimethylformamide; dioxolanes such as 1,3-dioxolane, 1,4-dioxolane, and/or the like; sulfolanes; and/or the like.

The non-aqueous organic solvent can be used alone or in a mixture of two or more types (or kinds), and if (e.g., when) two or more types (or kinds) are used in a mixture, a mixing ratio can be appropriately or suitably adjusted according to the desired or suitable battery performance, which should be understood by those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte may further include vinyl ethylene carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables (or helps facilitate) a basic operation of a rechargeable lithium battery, and improves transportation of the lithium ions between positive and negative electrodes. Examples of the lithium salt may include at least one selected from among LiPF₆, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte has appropriate or suitable ionic conductivity and viscosity, and thus excellent or suitable performance can be achieved and lithium ions can move effectively or suitably.

### Separator

Depending on the type or kind of the rechargeable lithium battery, a separator may be present between the positive electrode and the negative electrode. The separator may include polyethylene, polypropylene, polyvinylidene fluoride, a multilayer film of two or more layers thereof, and/or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on a surface (e.g., one or both (e.g., simultaneously) surfaces (e.g., opposite surfaces)) of the porous substrate.

The porous substrate may be a polymer film formed of a polymer (e.g., any one) selected from among polyolefin (such as polyethylene and/or polypropylene), polyester (such as polyethylene terephthalate and/or polybutylene terephthalate), polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON^{™}), a copolymer and/or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one selected from among a structural unit derived from (meth)acrylic acid or (meth)acrylate, and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described in more detail below. However, the following examples are only examples of the present disclosure, and the present disclosure is not limited to the following examples.

### Example 1

### 1. Preparation of Positive Electrode Active Material

Co_{0.985}Al_{0.015}O₂ and Li₂CO₃ were mixed so that a mole ratio of (Co+AI):Li is 1:1.03, and then heat-treated at 1050 °C for 8 hours under an air atmosphere to prepare lithium cobalt-based composite oxide having a composition of Li_{1.03}Co_{0.985}Al_{0.015}O₂ and an average particle diameter (D₅₀) of about 17 µm. 98.95 wt% of the lithium cobalt-based composite oxide, 1.0 wt% of LiFePO₄, and 0.05 wt% of Al(OH)₃ based on 100 wt% a total weight of the mixture of the lithium cobalt-based composite oxide, LiFePO₄, and Al(OH)₃ were added to the reactor and dry-mixed by stirring at about 2,400 rpm for about 5 minutes to prepare a mixture. When the mixing was completed, the mixture was maintained at 45 °C or higher for about 3 minutes. The prepared mixture was fired at 400 °C under a nitrogen atmosphere to prepare a final positive electrode active material.

### 2. Manufacturing of Rechargeable Lithium Battery Cell

98.5 wt% of the positive electrode active material, 1.0 wt% of a polyvinylidene fluoride binder, and 0.5 wt% of a carbon nanotube conductive material were mixed to prepare positive electrode active material layer slurry. The positive electrode active material layer slurry was coated on an aluminium foil current collector, and then dried and compressed to manufacture a positive electrode.

97.5 wt% of a graphite negative electrode active material, 1.5 wt% of carboxymethyl cellulose, and 1 wt% of a styrene butadiene rubber were mixed in a water solvent to prepare a negative electrode active material layer slurry. The negative electrode active material layer slurry was coated on a copper foil current collector, dried, and compressed to manufacture a negative electrode.

Subsequently, the positive electrode, the negative electrode, a polytetrafluoroethylene separator, and an electrolyte solution (prepared by dissolving 1 M LiPF₆ in a mixed solvent of ethylene carbonate and dimethyl carbonate in a volume ratio of 3:7) were used to manufacture a rechargeable lithium battery cell by a method that should be well understood by those of ordinary skill in the art.

### Example 2

A positive electrode active material and a rechargeable lithium battery cell were manufactured substantially in the same manner as in Example 1, except that 97.95 wt% of lithium cobalt-based composite oxide, 2.0 wt% of LiFePO₄, and 0.05 wt% of Al(OH)₃ were used to prepare the positive electrode active material.

### Example 3

A positive electrode active material and a rechargeable lithium battery cell were manufactured substantially in the same manner as in Example 1, except that 96.95 wt% of the lithium cobalt-based composite oxide, 3.0 wt% of LiFePO₄, and 0.05 wt% of Al(OH)₃ to prepare the positive electrode active material.

### Comparative Example 1

A positive electrode active material and a rechargeable lithium battery cell were manufactured substantially in the same manner as in Example 1, except that the lithium cobalt-based composite oxide alone was used as the final positive electrode active material.

### Comparative Example 2

A positive electrode active material and a rechargeable lithium battery cell were manufactured substantially in the same manner as in Example 1, except that the positive electrode active material was prepared by dry-mixing 99.0 wt% of the lithium cobalt-based composite oxide and 1.0 wt% of LiFePO₄, that is, without adding Al(OH)₃, by stirring at 1,200 rpm for about 5 minutes to prepare the mixture but not firing the mixture.

### Comparative Example 3

A positive electrode active material and a rechargeable lithium battery cell were manufactured substantially in the same manner as in Comparative Example 2, except that the stirring was performed at 2,400 rpm for about 5 minutes (again, the mixture was not fired).

### Comparative Example 4

A positive electrode active material and a rechargeable lithium battery cell were manufactured substantially in the same manner as in Example 1, except that the positive electrode active material was prepared by dry-mixing 99.95 wt% of the lithium cobalt-based composite oxide and 0.05 wt% of Al(OH)₃, that is, without adding LiFePO₄, to prepare the mixture and then, not firing the mixture.

### Comparative Example 5

A positive electrode active material and a rechargeable lithium battery cell were manufactured substantially in the same manner as in Example 1, except that the positive electrode active material was prepared by not firing the mixture.

### Comparative Example 6

A positive electrode active material and a rechargeable lithium battery cell were manufactured substantially in the same manner as in Example 1, except that the firing was performed under an air atmosphere rather than the nitrogen atmosphere.

The manufacturing methods of Examples 1 to 3 and Comparative Examples 1 to 6 are summarized in Table 1.

**(Table 1)**

| | Compositions of reactants | | Mixing conditions (step (i)) | | Firing conditions (step (ii)) | |
|---|---|---|---|---|---|---|
| | Material | Content (wt%) | Speed (rpm) | Time (min.) | Temperature (°C) | Atmosphere |
| Example 1 | Li_{1.03}CO_{0.985}Al_{0.015}O₂ | 98.95 | 2,400 | 5 | 400 | nitrogen |
| | LiFePO₄ | 1.0 | | | | |
| | Al(OH)₃ | 0.05 | | | | |
| Example 2 | Li_{1.03}CO_{0.985}Al_{0.015}O₂ | 97.95 | 2,400 | 5 | 400 | nitrogen |
| | LiFePO₄ | 2.0 | | | | |
| | Al(OH)₃ | 0.05 | | | | |
| Example 3 | Li_{1.03}CO_{0.985}Al_{0.015}O₂ | 96.95 | 2,400 | 5 | 400 | nitrogen |
| | LiFePO₄ | 3.0 | | | | |
| | Al(OH)₃ | 0.05 | | | | |
| Comparative Example 1 | Li_{1.03}CO_{0.985}Al_{0.015}O₂ | 100 | - | - | - | - |
| Comparative Example 2 | Li_{1.03}CO_{0.985}Al_{0.015}O₂ | 99.0 | 1,200 | 5 | - | - |
| | LiFePO₄ | 1.0 | | | | |
| Comparative Example 3 | Li_{1.03}CO_{0.985}Al_{0.015}O-₂ | 99.0 | 2,400 | 5 | - | - |
| | LiFePO₄ | 1.0 | | | | |
| Comparative Example 4 | Li_{1.03}CO_{0.985}Al_{0.015}O₂ | 99.95 | 2,400 | 5 | - | - |
| | Al(OH)₃ | 0.05 | | | | |
| Comparative Example 5 | Li_{1.03}CO_{0.985}Al_{0.015}O₂ | 98.95 | 2,400 | 5 | - | - |
| | LiFePO₄ | 1.0 | | | | |
| | Al(OH)₃ | 0.05 | | | | |
| Comparative Example 6 | Li_{1.03}CO_{0.985}Al_{0.015}O₂ | 98.95 | 2,400 | 5 | 400 | Air |
| | LiFePO₄ | 1.0 | | | | |
| | Al(OH)₃ | 0.05 | | | | |

### Evaluation Example 1: Surface Analysis of Positive Electrode Active Material

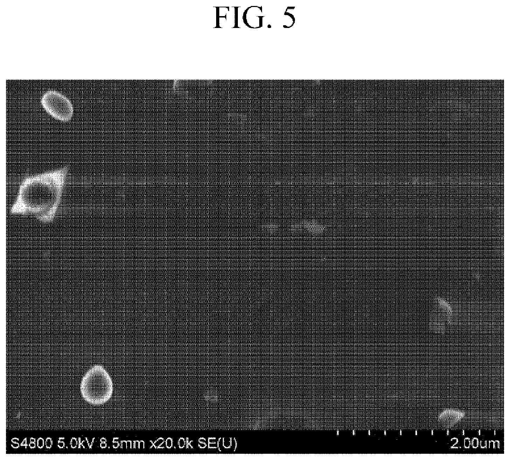

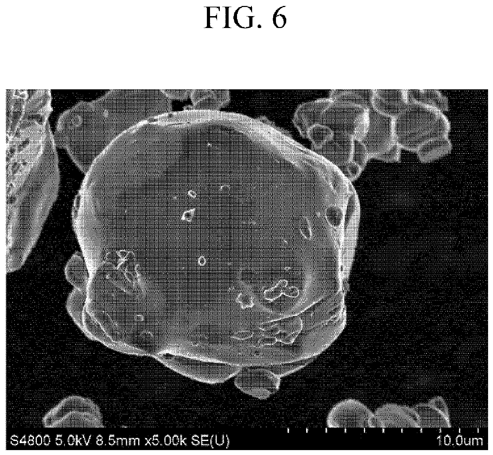

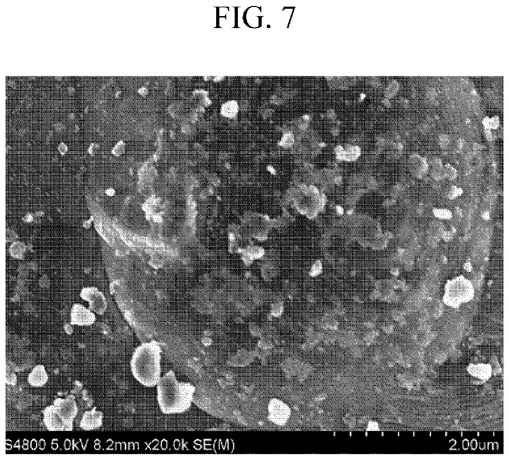

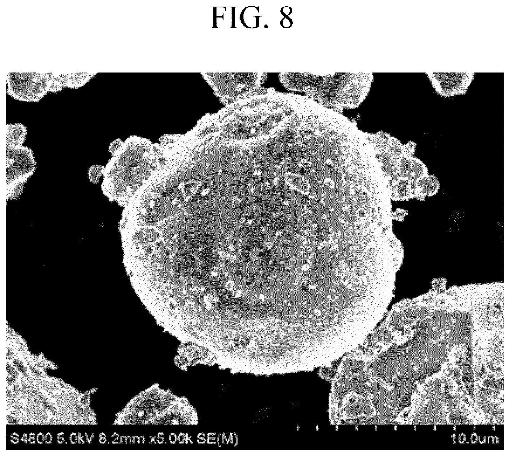

The positive electrode active materials according to Example 1 and Comparative Example 1 were compared by taking an image with a scanning electron microscope. FIGS. 5 and 6 are SEM images showing the particle surface of the positive electrode active material according to Comparative Example 1, and FIGS. 7 and 8 are SEM images showing the positive electrode active material particle surface including LiFePO₄ and aluminium according to Example 1. Referring to FIGS. 5 to 8, in the positive electrode active material of Example 1, LiFePO₄ and aluminium were uniformly (e.g., substantially uniformly) coated on the positive electrode active material particle surface, compared to the Comparative Example 1.

### Evaluation Example 2: Evaluation of Initial Charge/Discharge Capacity and

### Efficiency

The rechargeable lithium battery cells of Examples 1 to 3 and Comparative Examples 1 to 6 were charged to an upper limit voltage of 4.55 V at a constant current of 0.2 C and to 0.05 C at the constant voltage and discharged to a cut-off voltage of 3.0 V at 0.2 C at 25 °C for initial charge and discharge. In Table 2, initial charge capacity, initial discharge capacity, and a ratio of the initial discharge capacity to the initial charge capacity as efficiency are provided.

### Evaluation Example 3: High-temperature Cycle-life Characteristics

After the initial charge/discharge of Evaluation Example 2, the cells were 50 times or more repeatedly charged and discharged at 1.0 C within a voltage range of 3.0 V to 4.55 V at 45 °C to calculate a ratio of 50^{th} cycle discharge capacity to the initial discharge capacity, and the results are shown in Table 2 as high-temperature cycle-life.

**(Table 2)**

| | Initial charge capacity (mAh/g) | Initial discharge capacity (mAh/g) | Efficiency (%) | High-temperature cycle-life (%, 45°C, 50cyc) |
|---|---|---|---|---|
| Example 1 | 209.1 | 200.9 | 96.1 | 95.4 |
| Example 2 | 206.3 | 198.5 | 96.2 | 95.2 |
| Example 3 | 203.5 | 196.0 | 96.4 | 94.5 |
| Comparative Example 1 | 209.5 | 199.4 | 95.2 | 85.2 |
| Comparative Example 2 | 208.5 | 199.5 | 95.7 | 87.9 |
| Comparative Example 3 | 208.2 | 199.0 | 95.6 | 88.5 |
| Comparative Example 4 | 208.5 | 199.1 | 95.5 | 91.2 |
| Comparative Example 5 | 208.3 | 198.7 | 95.4 | 91.3 |
| Comparative Example 6 | 206.3 | 192.3 | 93.2 | 87.2 |

Referring to Table 2, Examples 1 to 3 (including LiFePO₄ and aluminium on the positive electrode active material surface, made by adding LiFePO₄ and aluminium hydroxide and then, proceeding with stirring and firing under specific conditions according to the present embodiments) exhibited excellent or suitable efficiency and high-temperature cycle-life characteristics.

In contrast, Comparative Examples 1 to 4, to which LiFePO₄ and/or aluminium hydroxide were not added, compared to Examples 1 to 3, exhibited deteriorated high-temperature cycle-life characteristics. In particular, Comparative Examples 1 to 3 (to which aluminium hydroxide was not added), compared to the other comparative examples, exhibited further deteriorated high-temperature cycle-life characteristics. In one or more embodiments, Comparative Example 5 (in which LiFePO₄ and aluminium hydroxide were coated together without firing) and Comparative Example 6 (in which the LiFePO₄ and aluminium hydroxide were coated together by firing under an air atmosphere), exhibited deteriorated high-temperature cycle-life characteristics, compared to Examples 1 to 3. For example, the positive electrode active materials of the examples, which were prepared by dry-mixing lithium cobalt-based composite oxide-containing core particles with a lithium iron phosphate-based compound and aluminium under set or predetermined conditions and heat-treating the mixture under set or predetermined conditions, exhibited improved initial charge/discharge capacity and efficiency and also, improved high-temperature cycle-life characteristics.

### Evaluation Example 4: DSC

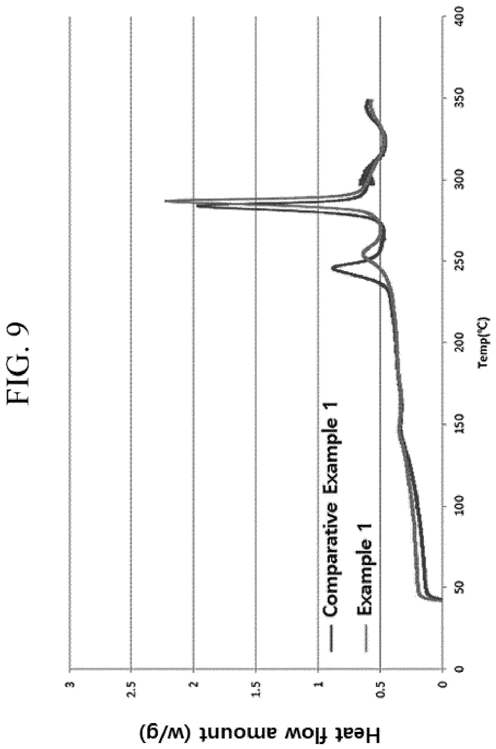

The positive electrode active materials of Example 1 and Comparative Example 1 were evaluated with respect to thermal stability by measuring a heat flow amount according to a temperature through differential scanning calorimetry, and the results are shown in FIG. 9. The measurement was performed by using a differential scanning calorimeter (SENSYS evo, SETARAM Instrumentation) and specifically, by taking 15 mg of each positive electrode charged to 4.55 V (vs. Li/Li⁺), adding it to 20 µL of an electrolyte solution and, increasing the temperature at 10 °C per minute C to 400 °C.

Referring to FIG. 9, Example 1 (including LiFePO₄ and aluminium on the surface of the positive electrode active material) exhibited delayed onset and appearance of a peak at a higher temperature than the positive electrode active material of Comparative Example 1, which confirmed that the DSC measurement exhibited reduced exothermicity and accordingly, that thermal stability was improved.

While this disclosure has been described in connection with what are presently considered to be example embodiments, it is to be understood that the present disclosure is not limited to the disclosed embodiments. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing disclosure is intended to cover various modifications and equivalent arrangements included within the scope of the appended claims and their equivalents.

Embodiments are set out in the following clauses:
Clause 1. A positive electrode active material, comprising: a core particle comprising lithium cobalt-based composite oxide; and a coating layer located on the surface of the core particle and comprising a lithium iron phosphate-based compound and aluminium.
Clause 2. The positive electrode active material of Clause 1, wherein the lithium cobalt-based composite oxide is represented by Chemical Formula 1:

   Chemical Formula 1 Liₐ₁COₓ₁Al_{y1}Mg_{z1}M¹_{w1}O_{2-b1}X_{b1}

   and, in Chemical Formula 1, 0.9≤a1≤1.8, 0.8≤x1≤0.99, 0≤y1≤0.1, 0≤z1≤0.1, 0≤w1≤0.1, 0.9≤x1+y1+z1≤1.1, and 0≤b1≤0.1, M¹ is one or more selected from among B, Ba, Ca, Ce, Cr, Cu, Fe, Mn, Mo, Nb, Si, Sn, Sr, Ti, V, W, Zn, and Zr, and X is one or more selected from among F, P, and S.
Clause 3. The positive electrode active material of Clause 1 or Clause 2, wherein an average particle diameter (D₅₀) of the core particle is about 9 µm to about 25 µm.
Clause 4. The positive electrode active material of any preceding Clause, wherein the lithium iron phosphate-based compound is represented by Chemical Formula 2 or Chemical Formula 3:

   Chemical Formula 2 Liₐ₂Fe₍₁₋ₓ₂₎M²ₓ₂PO₄

   and, in Chemical Formula 2, 0.90≤a2≤1.5, 0≤x2≤0.4, and M² is Al, Ca, Ce, Cr, Cu, La, Mg, Mn, Mo, Nb, Ni, Sn, Sr, Ti, V, W, Y, Zn, Zr, or a combination thereof,

   Chemical Formula 3 Liₐ₃Mnₓ₃Fe_{(1-x3-y3)}M³_{y3}PO₄

   and, in Chemical Formula 3, 0.90≤a3≤1.5, 0.1≤x3≤0.9, x3+y3<1, and M³ is Al, Ca, Ce, Cr, Cu, La, Mg, Mo, Nb, Ni, Sn, Sr, Ti, V, W, Y, Zn, Zr, or a combination thereof.
Clause 5. The positive electrode active material of any preceding Clause, wherein the lithium iron phosphate-based compound comprises LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, or a combination thereof.
Clause 6. The positive electrode active material of any preceding Clause, wherein a content of the lithium iron phosphate compound in the coating layer is about 0.1 wt% to about 5 wt% based on 100 wt% of the total positive electrode active material.
Clause 7. The positive electrode active material of any preceding Clause, wherein a content of the aluminium in the coating layer is about 0.01 wt% to about 2 wt% based on 100 wt% of a total metal in the positive electrode active material excluding lithium.
Clause 8. The positive electrode active material of any preceding Clause, wherein a thickness of the coating layer is about 30 nm to about 500 nm.
Clause 9. A method of preparing a positive electrode active material, the method comprising: (i) dry-mixing a lithium cobalt-based composite oxide, a lithium iron phosphate-based compound, and an aluminium raw material to prepare a mixture; and (ii) firing the mixture in a nitrogen atmosphere or inert gas atmosphere.
Clause 10. The method of Clause 9, wherein the dry-mixing in (i) is performed at about 2,000 rpm or more.
Clause 11. The method of Clause 9 or Clause 10, wherein the aluminium raw material comprises aluminium nitrate, aluminium sulfate, aluminium carbonate, aluminium hydroxide, aluminium oxide, or a combination thereof.
Clause 12. The method of any of Clauses 9 to 11, wherein based on a total of 100 wt% of the mixture of the lithium cobalt-based composite oxide, the lithium iron phosphate-based compound, and the aluminium raw material, about 90 wt% to about 99.8 wt% is of the lithium cobalt-based composite oxide, about 0.1 wt% to about 9.9 wt% is of the lithium iron phosphate-based compound, and about 0.01 wt% to about 2 wt% is of the aluminium raw material.
Clause 13. The method of any of Clauses 9 to 12, wherein the method further comprises maintaining the mixture prepared in (i) at a temperature of greater than or equal to about 45 °C for greater than or equal to about 3 minutes.
Clause 14. The method of any of Clauses 9 to 13, wherein in the firing the mixture in (ii), a firing temperature is about 300 °C to about 500 °C.
Clause 15. A positive electrode, comprising: a positive electrode current collector, and a positive electrode active material layer on the positive electrode current collector, wherein the positive electrode active material layer comprises the positive electrode active material of any of Clauses 1 to 8.
Clause 16. A rechargeable lithium battery, comprising: the positive electrode of Clause 15; a negative electrode; and an electrolyte.

### <Reference Numerals>

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising:
a core particle comprising lithium cobalt-based composite oxide; and
a coating layer located on the surface of the core particle and comprising a lithium iron phosphate-based compound and aluminium.

2. The positive electrode active material as claimed in claim 1, wherein
the lithium cobalt-based composite oxide is represented by Chemical Formula 1:
Chemical Formula 1 Liₐ₁Coₓ₁Al_{y1}Mg_{z1}M¹_{w1}O_{2-b1}X_{b1}, and
in Chemical Formula 1, 0.9≤a1≤1.8, 0.8≤x1≤0.99, 0≤y1≤0.1, 0≤z1≤0.1, 0≤w1 ≤0.1, 0.9≤x1+y1+z1≤1.1, and 0≤b1≤0.1, M¹ is one or more selected from among B, Ba, Ca, Ce, Cr, Cu, Fe, Mn, Mo, Nb, Si, Sn, Sr, Ti, V, W, Y, Zn, and Zr, and X is one or more selected from among F, P, and S.

3. The positive electrode active material as claimed in claim 1 or claim 2, wherein
an average particle diameter (D₅₀) of the core particle is about 9 µm to about 25 µm.

4. The positive electrode active material as claimed in any preceding claim, wherein
the lithium iron phosphate-based compound is represented by Chemical Formula 2 or Chemical Formula 3:
**Chemical Formula 2** Liₐ₂Fe₍₁₋ₓ₂₎M²ₓ₂PO₄,
in Chemical Formula 2, 0.90≤a2≤1.5, 0≤x2≤0.4, and M² is Al, Ca, Ce, Cr, Cu, La, Mg, Mn, Mo, Nb, Ni, Sn, Sr, Ti, V, W, Y, Zn, Zr, or a combination thereof, **Chemical Formula 3**
Liₐ₃Mnₓ₃Fe_{(1-x3-y3})M³_{y3}PO₄,
and
in Chemical Formula 3, 0.90≤a3≤1.5, 0.1≤x3≤0.9, 0<x3+y3 < 1, and M³ is Al, Ca, Ce, Cr, Cu, La, Mg, Mo, Nb, Ni, Sn, Sr, Ti, V, W, Y, Zn, Zr, or a combination thereof.

5. The positive electrode active material as claimed in any preceding claim, wherein
the lithium iron phosphate-based compound comprises LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, or a combination thereof.

6. The positive electrode active material as claimed in any preceding claim, wherein
(a) a content of the lithium iron phosphate-based compound in the coating layer is about 0.1 wt% to about 5 wt% based on 100 wt% of the total weight of the positive electrode active material, and/or
(b) a content of the aluminium in the coating layer is about 0.01 wt% to about 2 wt% based on 100 wt% of a total metal in the positive electrode active material excluding lithium.

7. The positive electrode active material as claimed in any preceding claim, wherein
a thickness of the coating layer is about 30 nm to about 500 nm.

8. A method of preparing a positive electrode active material, the method comprising:
(i) dry-mixing a lithium cobalt-based composite oxide, a lithium iron phosphate-based compound, and an aluminium raw material to prepare a mixture; and
(ii) firing the mixture in a nitrogen atmosphere or inert gas atmosphere.

9. The method as claimed in claim 8, wherein
the dry-mixing in (i) is performed at about 2,000 rpm or more.

10. The method as claimed in claim 8 or claim 9, wherein
the aluminium raw material comprises aluminium nitrate, aluminium sulfate, aluminium carbonate, aluminium hydroxide, aluminium oxide, or a combination thereof.

11. The method as claimed in any of claims 8 to 10, wherein
based on a total weight of 100 wt% of the mixture of the lithium cobalt-based composite oxide, the lithium iron phosphate-based compound, and the aluminium raw material,
about 90 wt% to about 99.8 wt% is of the lithium cobalt-based composite oxide, about 0.1 wt% to about 9.9 wt% is of the lithium iron phosphate-based compound, and
about 0.01 wt% to about 2 wt% is of the aluminium raw material.

12. The method as claimed in any of claims 8 to 11, wherein
the method further comprises maintaining the mixture prepared in (i) at a temperature of greater than or equal to about 45 °C for greater than or equal to about 3 minutes.

13. The method as claimed in any of claims 8 to 12, wherein
in the firing the mixture in (ii), a firing temperature is about 300 °C to about 500 °C.

14. A positive electrode, comprising:
a positive electrode current collector, and
a positive electrode active material layer on the positive electrode current collector,
wherein the positive electrode active material layer comprises the positive electrode active material as claimed in any of claims 1 to 7.

15. A rechargeable lithium battery, comprising:
the positive electrode as claimed in claim 14;
a negative electrode; and
an electrolyte.
